# FASCICULE DE BREVET EUROPEEN

(11) **EP 3 823 805 B1**
(45) Date de publication et mention de la délivrance du brevet: **04.05.2022**
(21) Numéro de dépôt: 19769224.7
(22) Date de dépôt: 10.07.2019
(51) Int. Cl.: B29C 33/10, B29D 30/06, B29C 33/38

(54) **PROCÉDÉ DE RÉALISATION D'UN ÉLÉMENT MOULANT AVEC FENTE D'ÉVACUATION D'AIR**
VERFAHREN ZUR HERSTELLUNG EINES FORMELEMENTS MIT EINEM LUFTAUSLASSSCHLITZ
METHOD FOR PRODUCING A MOLDING ELEMENT HAVING AN AIR DISCHARGE SLOT

(30) Priorité: 21.07.2018 FR 1870848
(43) Date de publication de la demande: 26.05.2021
(73) Titulaire: Compagnie Générale des Etablissements Michelin, 63000 Clermont-Ferrand (FR)
(72) Inventeur: CALVEL, Romain, 63040 Clermont-Ferrand Cedex 9 (FR); LESMARIE, Michel, 63040 Clermont-Ferrand Cedex 9 (FR)
(74) Mandataire: Roussy, Delphine
(86) Numéro de dépôt international: PCT/IB2019/055863
(87) Numéro de publication internationale: WO 2020/021369

(56) Documents cités:
- EP-A1- 3 308 926
- DE-A1-102014 216 865

## Description

### DOMAINE TECHNIQUE DE L'INVENTION

La présente invention concerne un procédé de réalisation d'un élément moulant destiné à être assemblé dans un moule pour le moulage d'un pneumatique, ledit élément moulant comprenant une surface de moulage adaptée pour le moulage d'une partie du pneumatique et une surface externe opposée à la surface de moulage, des moyens d'éventation adaptés pour l'évacuation d'un flux d'air de la surface de moulage vers la surface externe, lesdits moyens d'éventation comprenant une première partie de largeur L1 comprise entre 0,03mm et 0,07mm et de profondeur P1 inférieure ou égale à 3mm, ladite première partie débouchant sur la surface de moulage et une deuxième partie en communication avec la première partie et débouchant sur la surface externe, la largeur L2 de la deuxième partie étant comprise entre 1mm et 5mm et plus préférentiellement entre 2mm et 3mm, la première partie formant un parcours fermé sur lui-même.

### ETAT DE LA TECHNIQUE ANTERIEURE

Lors du processus de moulage et de vulcanisation des pneumatiques, les effets combinés de la pression, de la température et des réactions chimiques en cours génèrent une certaine quantité de gaz qui doit être libérée du moule pendant le moulage. Pour mettre en place des moyens d'évacuation des gaz, les industriels utilisent en général une solution consistant à utiliser des moules dont la couronne externe comporte des petits trous formant une pluralité des tunnels d'évacuation répartis sur la circonférence du moule. Cette approche est certes efficace pour assurer le passage des gaz, mais produit à la surface de la bande de roulement des picots, de forme correspondante au profil des trous, formés par le mélange caoutchoutique qui a tendance à fluer dans les ouvertures d'éventation. Ces picots, disséminés sur la périphérie de la bande de roulement et souvent sur une portion des flancs du pneumatique, affectent l'esthétique du produit final et perdurent tant et aussi longtemps que le pneumatique n'a pas roulé un certain nombre de kilomètres. Pour éviter la présence de ces picots, les industriels recherchent depuis longtemps une solution pour permettre le flux d'air ou de gaz vers l'extérieur du moule, sans toutefois altérer le produit nouvellement moulé.

Le document EP1361042 décrit un moule pour pneumatique comportant une couronne périphérique feuilletée. Cette couronne est constituée par un empilage dans la direction circonférentielle d'une pluralité de tôles de faible épaisseur. Des découpes réparties sur plusieurs tôles adjacentes augmentent le potentiel d'éventation du moule. Ce mode de réalisation est efficace pour un moule feuilleté uniquement.

Les documents DE 10 2014 216865 A1 et EP 3 308 926 A1 divulguent d' autres exemples de moules pour pneus.

Il existe donc un besoin pour un moule favorisant l'évacuation de l'air pendant le moulage, mais sans affecter l'esthétique du pneumatique moulé.

Pour pallier ces différents inconvénients, l'invention prévoit différents moyens techniques.

### EXPOSE DE L'INVENTION

Tout d'abord, un premier objet de l'invention consiste à prévoir un procédé de réalisation d'élément moulant pour le moulage de la partie extérieure de la bande de roulement d'un pneumatique permettant l'évacuation de l'air libéré lors des phases de vulcanisation, sans formation de picots à la surface de la bande de roulement.

**Un** autre objet de l'invention consiste à prévoir un procédé de réalisation d'un élément moulant pour le moulage de la partie extérieure de la bande de roulement d'un pneumatique permettant de s'assurer que les moyens d'éventation réalisés sont bien fonctionnels.

Pour ce faire, l'invention prévoit un procédé de réalisation d'un élément moulant destiné à être assemblé dans un moule pour le moulage d'un pneumatique, ledit élément moulant comprenant une surface de moulage adaptée pour le moulage d'une partie du pneumatique et une surface externe opposée à la surface de moulage, des moyens d'éventation adaptés pour l'évacuation d'un flux d'air de la surface de moulage vers la surface externe, lesdits moyens d'éventation comprenant une première partie de largeur L1 comprise entre 0,03mm et 0,07mm et de profondeur P1 inférieure ou égale à 3mm, ladite première partie débouchant sur la surface de moulage et une deuxième partie en communication avec la première partie et débouchant sur la surface externe, la largeur L2 de la deuxième partie étant comprise entre 1mm et 5mm et plus préférentiellement entre 2mm et 3mm, la première partie formant un parcours fermé sur lui-même,_ledit procédé comprenant les étapes suivantes:
i) une étape de réalisation par laser de la première partie dans l'élément de moulage, ladite première partie ayant un axe longitudinal A1 ;
ii) une étape de réalisation de la deuxième partie dans l'élément de moulage, ladite deuxième partie étant en communication avec ladite première partie, ladite deuxième partie ayant un axe longitudinal A2 ;
   ledit procédé étant caractérisé en ce que:
iii) l'étape de réalisation de la deuxième partie est réalisée avant l'étape de réalisation de la première partie;
iv) les étapes i et ii étant effectuées de façon à ce que l'axe A2 de la deuxième partie (6) et l'axe A1 de la première partie sont espacés par un décalage D d'au moins 0.5mm.

Selon un mode de réalisation avantageux, les étapes i et ii sont effectuées de façon à ce que l'axe A2 de la deuxième partie (6) et l'axe A1 de la première partie (5) sont espacés par un décalage D d'au moins 1 mm.

**Cette** communication entre les deux parties permet le passage de l'air à éventer entre celles-ci. Si la première partie était réalisée avant la deuxième partie, il y aurait un important risque d'obstruction de la première partie avec les débris et poussières générées lors de la réalisation de la deuxième partie, car le passage libre de la première partie est de faible dimension. Le procédé ci-dessus permet, en réalisant la première partie après la deuxième partie, d'éviter le risque d'obstruction de la première partie. En pratique, dans un élément moulant, une pluralité de moyens d'éventation sont en général prévus. On prévoit avantageusement d'effectuer simultanément plusieurs deuxièmes parties, puis plusieurs premières parties.

Le décalage D entre les axes respectifs des premières et deuxièmes parties permet de faire en sorte qu'il subsiste toujours une zone commune entre les deux parties. En effet, du fait du parcours fermé sur lui-même de la première partie, l'absence de zone commune créerait une situation dans laquelle le noyau central de la première partie ne serait plus maintenu et créerait une grande ouverture.

Selon un mode de réalisation, la première partie forme un parcours polygonal, circulaire ou ovale.

Par exemple, la première partie forme un parcours en forme de carré, de rectangle, d'hexagone, de triangle, de pentagone, d'heptagone, d'octogone, d'ennéagone, de décagone, d'hendécagone, de dodécagone, de losange, de trapèze, de parallélogramme, ou toute autre forme de fente où les deux extrémités sont jointes.

Selon un exemple de mise en oeuvre avantageuse, la première partie est réalisée par laser guidé par jet d'eau. Le laser guidé par jet d'eau permet de pratiquer une fente de faible largeur de façon précise, fiable et économique.

Selon un autre exemple de réalisation, la deuxième partie est réalisée par perçage. On utilise par exemple un foret à embout conique.

En variante, la deuxième partie est réalisée par usinage. On utilise par exemple une fraise à bout plat.

De manière avantageuse, la première partie et la deuxième partie sont réalisées sur des machines à cinq axes. Ce type de machine procure une grande souplesse de mise en œuvre et permet de réaliser pratiquement tout type de profil de fente.

Selon divers modes de réalisation avantageux, la deuxième partie est une cavité, ou une rainure. La première partie est avantageusement une fente.

**De** manière avantageuse, la profondeur P1 de la fente est supérieure de 0,1 à 1 mm à l'épaisseur EP de la paroi résultant de l'usinage. Cette caractéristique permet de sécuriser la mise en œuvre afin de s'assurer que la première partie est suffisamment profonde pour permettre la communication avec la deuxième partie.

### DESCRIPTION DES FIGURES

Tous les détails de réalisation sont donnés dans la description qui suit, complétée par les figures 1 à 4b, présentées uniquement à des fins d'exemples non limitatifs, et dans lesquelles:
- la figure 1 est une vue en perspective d'un exemple de réalisation d'un élément moulant avec un moyen d'éventation ;
- les figures 2a et 2b illustrent schématiquement un exemple de disposition non convenable pour réaliser un moyen d'éventation ;
- les figures 3a et 3b illustrent schématiquement un exemple de disposition convenable pour réaliser un moyen d'éventation ;
- les figures 4a et 4b illustrent schématiquement des variantes de réalisation avec diverses dispositions relatives entre la première et la deuxième partie des moyens d'éventation.

### DESCRIPTION DETAILLEE DE L'INVENTION

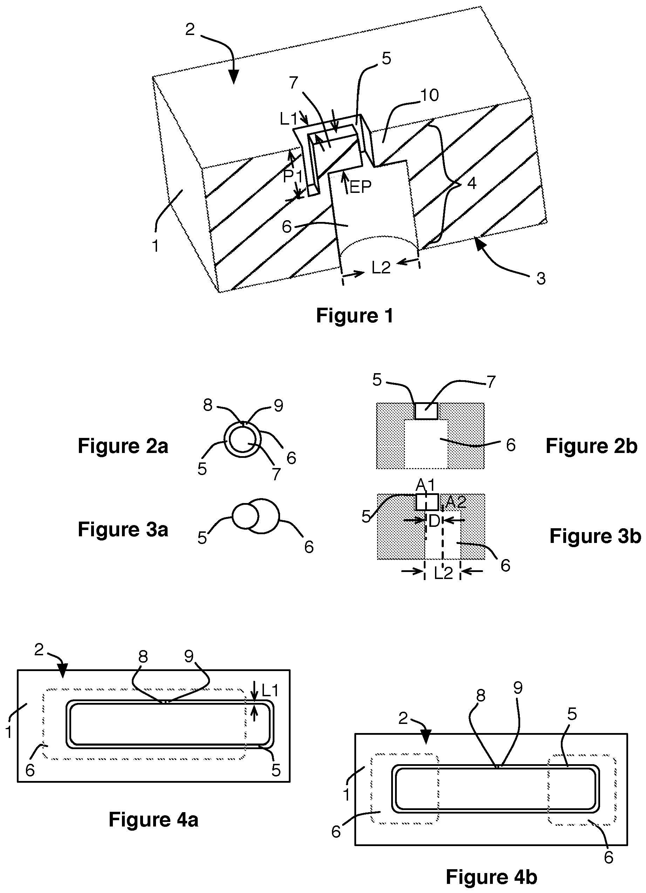

La figure 1 illustre un exemple de réalisation d'une portion d'un élément moulant 1 dans lequel un moyen d'éventation 4 relie une surface de moulage 2 et une surface externe 3 dudit élément moulant 1. Le moyen d'éventation comporte une première partie 5 et une deuxième partie 6 en communication l'une avec l'autre. La première partie 5 débouche sur la surface de moulage 2. La deuxième partie 6 débouche sur la surface externe 3.

**Tel** qu'illustré aux figures 3a, 4a et 4b, les deux extrémités 8, 9 de la première partie sont jointes, formant un parcours fermé sur lui-même. La fente de la première partie forme un parcours polygonal, par exemple en forme de carré ou de cercle (tel qu'illustré dans l'exemple de la figure 3a), d'ovale, d'hexagone, de triangle, de rectangle (tel qu'illustré par exemple aux figures 4a et 4b), de pentagone, d'heptagone, d'octogone, d'ennéagone, de décagone, d'hendécagone, de dodécagone, de losange, de trapèze, de parallélogramme, ou tout autre forme où les deux extrémités 8, 9 se referment l'une sur l'autre.

La première partie 5 a une profondeur P1 supérieure de 0,1mm à 1mm à l'épaisseur EP de la paroi résultant de l'usinage tel qu'illustré à la figure 1. Ces dimensions permettent de s'assurer que les deux parties sont bel et bien en communication l'une avec l'autre.

Dans cet exemple de réalisation, la première partie est réalisée par un laser guidé par un jet d'eau. La largeur de la première partie 5 est comprise entre 0,03mm et 0,07mm et sa profondeur P1 est inférieure ou égale à 3mm. Cette profondeur correspond à la limite de précision suffisante pour la réalisation de la première partie 5. Au delà de 3mm, le laser guidé par un jet d'eau pourrait conférer des résultats insuffisants pour garantir la réalisation de la première partie dans des conditions optimales.

**La** largeur L2 de la deuxième partie 6 est comprise entre 1mm et 5mm, et plus préférentiellement entre 2mm et 3mm.

**Le** procédé de réalisation de l'élément moulant 1 comprend les étapes suivantes, effectuées de façon successive, dans l'ordre suivant :
a) réalisation de la deuxième partie 6 dans l'élément de moulage,
b) réalisation par laser de la première partie 5 dans l'élément de moulage, de façon à ce que la première partie 5 et la deuxième partie 6 soient en communication.

**La** première partie 5 est réalisée après la deuxième partie 6 pour éviter qu'un copeau ou rebut de coupe ou d'usinage ne vienne obstruer la première partie si celle-ci était réalisée avant la deuxième partie. A l'inverse, les copeaux de matière résultants de la réalisation de la première partie 5 après la deuxième partie 6, ne risquent pas de boucher ladite deuxième partie 6 compte tenu de ses grandes dimensions en regard de la première partie 5. Les étapes a et b sont effectuées de telle sorte que les axes longitudinaux respectifs A1 et A2 de la première partie 5 et de la deuxième partie 6 soient espacés par un décalage D d'au moins 0.5mm, préférentiellement 1 mm. Ce décalage D entre les deux parties permet d'éviter un cas tel que celui illustré à la figure 2a où les deux parties sont alignées. Dans un tel cas, la première partie 5 est entièrement libérée, sans aucun contact avec le reste de l'élément moulant. Ce cas, non conforme, conduit à un défaut de fabrication.

La deuxième partie 6 est réalisée par perçage en utilisant un foret à embout conique par exemple. Dans une variante, la deuxième partie 6 est réalisée par usinage, en utilisant une fraise à bout plat par exemple, et/ou sur une machine à cinq axes. Dans les exemples de réalisation, la deuxième partie 6 est une cavité telle qu'illustrée aux figures 1 à 3b. En variante, la deuxième partie 6 est une rainure telle qu'illustrée aux figures 4a et 4b.

Dans les figures 1 à 4b, la première partie 5 est une fente formant un parcours dont les deux extrémités 8 et 9 se rejoignent.

Les figures 3a et 3b illustrent un exemple de réalisation de la fente par rapport au perçage de la deuxième partie 6. Tel qu'illustré, la deuxième partie 6 est désaxée par rapport à la première partie 5. Les deux parties peuvent être plus ou moins désaxées, à condition qu'au moins une zone de chacune des deux parties 5 et 6 soit en contact l'une avec l'autre, assurant le maintien de la première partie.

Les figures 4a et 4b illustrent des exemples de réalisation de la première partie 5 en forme de rectangle. A la figure 4a, la première partie 5 est légèrement désaxée par rapport à la deuxième partie et cette deuxième partie 6 est en forme de rainure 6. Une seule première partie 5 communique avec une seule deuxième partie 6. En variante, dans l'exemple de la figure 4b, la première partie 5 est en communication avec deux deuxièmes parties 6 distinctes.

**Numéros de référence employés sur les figures**

| | |
|---|---|
| 1 | Elément moulant |
| 2 | Surface de moulage |
| 3 | Surface externe |
| 4 | Moyen d'éventation |
| 5 | Première partie |
| 6 | Deuxième partie |
| 7 | Noyau central de la première partie |
| 8 | Première extrémité |
| 9 | Deuxième extrémité |
| 10 | Paroi résultant de l'usinage |

## Revendications

1. Procédé de réalisation d'un élément moulant (1) destiné à être assemblé dans un moule pour le moulage d'un pneumatique, ledit élément moulant (1) comprenant une surface de moulage (2) adaptée pour le moulage d'une partie du pneumatique et une surface externe (3) opposée à la surface de moulage, des moyens d'éventation (4) adaptés pour l'évacuation d'un flux d'air de la surface de moulage (2) vers la surface externe (3), lesdits moyens d'éventation (4) comprenant une première partie (5) de largeur L1 comprise entre 0,03mm et 0,07mm et de profondeur P1 inférieure ou égale à 3mm, ladite première partie débouchant sur la surface de moulage (2) et une deuxième partie (6) en communication avec la première partie (5) et débouchant sur la surface externe (3), la largeur L2 de la deuxième partie étant comprise entre 1mm et 5mm et plus préférentiellement entre 2mm et 3mm, la première partie (5) formant un parcours fermé sur lui-même, ledit procédé comprenant les étapes suivantes:
i) une étape de réalisation par laser de la première partie (5) dans l'élément de moulage, ladite première partie ayant un axe longitudinal A1 ;
ii) une étape de réalisation de la deuxième partie (6) dans l'élément de moulage, ladite deuxième partie étant en communication avec ladite première partie (5), ladite deuxième partie ayant un axe longitudinal A2 ; dans ledit procédé:
iii) l'étape de réalisation de la deuxième partie (6) est réalisée avant l'étape de réalisation de la première partie (5) ;
iv) les étapes i et ii étant effectuées de façon à ce que l'axe A2 de la deuxième partie (6) et l'axe A1 de la première partie (5) sont espacés par un décalage D d'au moins 0.5mm.

2. Procédé de réalisation d'un élément moulant (1) destiné à être assemblé dans un moule pour le moulage d'un pneumatique selon la revendication 1, dans lequel les étapes i et ii sont effectuées de façon à ce que l'axe A2 de la deuxième partie (6) et l'axe A1 de la première partie (5) sont espacés par un décalage D d'au moins 1 mm.

3. Procédé de réalisation d'un élément moulant (1) destiné à être assemblé dans un moule pour le moulage d'un pneumatique selon l'une des revendications 1 ou 2, dans lequel la première partie (5) forme un parcours polygonal, circulaire ou ovale.

4. Procédé de réalisation d'un élément moulant (1) destiné à être assemblé dans un moule pour le moulage d'un pneumatique selon l'une quelconque des revendications 1 à 3, dans lequel la première partie (5) est réalisée par laser guidé par jet d'eau.

5. Procédé de réalisation d'un élément moulant (1) destiné à être assemblé dans un moule pour le moulage d'un pneumatique selon quelconque l'une des revendications 1 à 3, dans lequel la deuxième partie (6) est réalisée par perçage ou par usinage.

6. Procédé de réalisation d'un élément moulant (1) destiné à être assemblé dans un moule pour le moulage d'un pneumatique selon la revendication 5, dans lequel la première partie et la deuxième partie sont réalisées sur des machines à cinq axes.

7. Procédé de réalisation d'un élément moulant (1) destiné à être assemblé dans un moule pour le moulage d'un pneumatique selon l'une quelconque des revendications 1 à 6, dans lequel la deuxième partie (6) est une cavité.

8. Procédé de réalisation d'un élément moulant (1) destiné à être assemblé dans un moule pour le moulage d'un pneumatique selon l'une quelconque des revendications 1 à 6, dans lequel la deuxième partie (6) est une rainure.

9. Procédé de réalisation d'un élément moulant (1) destiné à être assemblé dans un moule pour le moulage d'un pneumatique selon l'une quelconque des revendications précédentes, dans lequel la première partie (5) est une fente.

10. Procédé de réalisation d'un élément moulant (1) destiné à être assemblé dans un moule pour le moulage d'un pneumatique selon la revendication 9, dans lequel la profondeur P1 de la fente est supérieure de 0,1 à 1 mm à l'épaisseur EP de la paroi (10) résultant de l'usinage.

## Patentansprüche

1. Verfahren zur Herstellung eines Formelements (1), das dazu bestimmt ist, in einer Form zum Formen eines Reifens zusammengefügt zu werden, wobei das Formelement (1) eine Formfläche (2) umfasst, die zum Formen eines Teils des Reifens geeignet ist, und eine der Formfläche gegenüberliegende Außenfläche (3) sowie Entlüftungsmittel (4), die zur Evakuierung eines Luftstroms von der Formfläche (2) zur Außenfläche (3) geeignet sind, wobei die Entlüftungsmittel (4) einen ersten Teil (5) mit einer Breite L1 zwischen 0,03 mm und 0,07 mm und einer Tiefe P1 von höchstens 3 mm umfassen, wobei der erste Teil in die Formfläche (2) mündet und ein zweiter Teil (6) mit dem ersten Teil (5) in Verbindung steht und in die Außenfläche (3) mündet, wobei die Breite L2 des zweiten Teils zwischen 1 mm und 5 mm und besonders vorzugsweise zwischen 2 mm und 3 mm liegt, wobei der erste Teil (5) einen in sich geschlossenen Verlauf bildet, wobei das Verfahren die folgenden Schritte umfasst:
i) einen Schritt der Herstellung des ersten Teils (5) im Formelement per Laser, wobei der erste Teil eine Längsachse A1 aufweist;
ii) einen Schritt der Herstellung des zweiten Teils (6) im Formelement, wobei der zweite Teil mit dem ersten Teil (5) in Verbindung steht, wobei der zweite Teil eine Längsachse A2 aufweist;
wobei bei dem Verfahren:
iii) der Schritt der Herstellung des zweiten Teils (6) vor dem Schritt der Herstellung des ersten Teils (5) durchgeführt wird;
iv) die Schritte i und ii so durchgeführt werden, dass die Achse A2 des zweiten Teils (6) und die Achse A1 des ersten Teils (5) durch einen Versatz D von mindestens 0,5 mm voneinander beabstandet sind.

2. Verfahren zur Herstellung eines Formelements (1), das dazu bestimmt ist, in einer Form zum Formen eines Reifen zusammengefügt zu werden, nach Anspruch 1, wobei die Schritte i und ii so durchgeführt werden, dass die Achse A2 des zweiten Teils (6) und die Achse A1 des ersten Teils (5) durch einen Versatz D von mindestens 1 mm beabstandet sind.

3. Verfahren zur Herstellung eines Formelements (1), das dazu bestimmt ist, in einer Form zum Formen eines Reifens zusammengefügt zu werden, nach einem der Ansprüche 1 oder 2, wobei der erste Teil (5) einen polygonalen, kreisförmigen oder ovalen Verlauf bildet.

4. Verfahren zur Herstellung eines Formelements (1), das dazu bestimmt ist, in einer Form zum Formen eines Reifens zusammengefügt zu werden, nach einem der Ansprüche 1 bis 3, wobei der erste Teil (5) durch einen wasserstrahlgeführten Laser hergestellt wird.

5. Verfahren zur Herstellung eines Formelements (1), das dazu bestimmt ist, in einer Form zum Formen eines Reifens zusammengefügt zu werden, nach einem der Ansprüche 1 bis 3, wobei der zweite Teil (6) durch Bohren oder maschinelle Bearbeitung hergestellt wird.

6. Verfahren zur Herstellung eines Formelements (1), das dazu bestimmt ist, in einer Form zum Formen eines Reifens zusammengefügt zu werden, nach Anspruch 5, wobei der erste Teil und der zweite Teil an fünfachsigen Maschinen hergestellt werden.

7. Verfahren zur Herstellung eines Formelements (1), das dazu bestimmt ist, in einer Form zum Formen eines Reifens zusammengefügt zu werden, nach einem der Ansprüche 1 bis 6, wobei der zweite Teil (6) ein Hohlraum ist.

8. Verfahren zur Herstellung eines Formelements (1), das dazu bestimmt ist, in einer Form zum Formen eines Reifens zusammengefügt zu werden, nach einem der Ansprüche 1 bis 6, wobei der zweite Teil (6) eine Nut ist.

9. Verfahren zur Herstellung eines Formelements (1), das dazu bestimmt ist, in einer Form zum Formen eines Reifens zusammengefügt zu werden, nach einem der vorangehenden Ansprüche, wobei der erste Teil (5) ein Schlitz ist.

10. Verfahren zur Herstellung eines Formelements (1), das dazu bestimmt ist, in einer Form zum Formen eines Reifens zusammengefügt zu werden, nach Anspruch 9, wobei die Tiefe P1 des Schlitzes um 0,1 bis 1 mm größer ist als die Dicke EP der Wand (10), die sich aus der maschinellen Bearbeitung ergibt.

## Claims

1. Method for producing a moulding element (1) intended to be assembled in a mould for moulding a tyre, said moulding element (1) comprising a moulding surface (2) designed for moulding part of the tyre, and an external surface (3) opposite to the moulding surface, venting means (4) suited to discharging a flow of air from the moulding surface (2) towards the external surface (3), said venting means (4) comprising a first part (5) of width L1 comprised between 0.03 mm and 0.07 mm and of depth P1 less than or equal to 3 mm, said first part opening onto the moulding surface (2), and a second part (6) in communication with the first part (5) and opening onto the external surface (3), the width L2 of the second part being comprised between 1 mm and 5 mm and more preferably between 2 mm and 3 mm, the first part (5) forming a path that is closed on itself, said method comprising the following steps:
i) a step of creating the first part (5) in the moulding element using a laser, said first part having a longitudinal axis A1;
ii) a step of creating the second part (6) in the moulding element, said second part being in communication with said first part (5), said second part having a longitudinal axis A2;
in said method:
iii) the step of creating the second part (6) is performed before the step of creating the first part (5);
iv) steps i and ii being performed in such a way that the axis A2 of the second part (6) and the axis A1 of the first part (5) are spaced apart by an offset D of at least 0.5 mm.

2. Method for creating a moulding element (1) intended to be assembled in a mould for moulding a tyre according to Claim 1, wherein steps i and ii are performed in such a way that the axis A2 of the second part (6) and the axis A1 of the first part (5) are spaced apart by an offset D of at least 1 mm.

3. Method for creating a moulding element (1) intended to be assembled in a mould for moulding a tyre according to one of Claims 1 and 2, wherein the first part (5) forms a polygonal, circular or oval path.

4. Method for creating a moulding element (1) intended to be assembled in a mould for moulding a tyre according to any one of Claims 1 to 3, wherein the first part (5) is produced by waterjet-guided laser.

5. Method for creating a moulding element (1) intended to be assembled in a mould for moulding a tyre according to any one of Claims 1 to 3, wherein the second part (6) is produced by drilling or by machining.

6. Method for creating a moulding element (1) intended to be assembled in a mould for moulding a tyre according to Claim 5, wherein the first part and the second part are produced on five-axis machines.

7. Method for creating a moulding element (1) intended to be assembled in a mould for moulding a tyre according to any one of Claims 1 to 6, wherein the second part (6) is a cavity.

8. Method for creating a moulding element (1) intended to be assembled in a mould for moulding a tyre according to any one of Claims 1 to 6, wherein the second part (6) is a groove.

9. Method for creating a moulding element (1) intended to be assembled in a mould for moulding a tyre according to any one of the preceding claims, wherein the first part (5) is a slot.

10. Method for producing a moulding element (1) intended to be assembled in a mould for moulding a tyre according to Claim 9, wherein the depth P1 of the slot is 0.1 to 1 mm greater than the thickness EP of the wall (10) resulting from the machining operation.
